# EUROPÄISCHE PATENTSCHRIFT

(11) **EP 2 214 416 B1**
(45) Veröffentlichungstag und Bekanntmachung des Hinweises auf die Patenterteilung: **20.08.2014**
(21) Anmeldenummer: 09179429.7
(22) Anmeldetag: 16.12.2009
(51) Int. Cl.: H04Q 1/06, H04Q 1/14

(54) **Patch-Panel sowie Verfahren zu seiner Installation**
Patch panel and method for its installation
Patch-Panel ainsi que son procédé d'installation

(30) Priorität: 16.01.2009 DE 102009004917
(43) Veröffentlichungstag der Anmeldung: 04.08.2010
(73) Patentinhaber: Moll, Hans, 88069 Tettnang (DE)
(72) Erfinder: Moll, Hans, 88069 Tettnang (DE)
(74) Vertreter: Neidl-Stippler, Cornelia

(56) Entgegenhaltungen:
- WO-A1-2006/012389
- US-A1- 2002 117 942
- US-A1- 2008 303 392

## Beschreibung

Die Erfindung betrifft ein Patch Panel, insbesondere für metallische Leiter aufweisende Kabel, wie Kupferkabel sowie ein Verfahren zu dessen (Nach) Installation.

Patch-Panels sind Umsteckfelder, welche dem Anschluß, dem Verteilen und Rangieren von Verbindungen dienen. Die Frontblende eines Patch-Panels beinhaltet die Anschlußkomponenten für abgehende Kabel: jeder Anschlußdose ist auf dem Patchfeld eine eigene Steckverbindung zugeordnet. Patch-Panel gibt es in verschiedensten Ausführungsformen, sie unterschieden sich sowohl in der Anzahl, als auch der Ausbildung für Steckeinrichtungen. In der Regel haben Patch-Panel in Reihe liegende Anschlußkomponenten der gleichen Kategorie: Patch-Panel für elektrisch leitfähige Kabel, bspw. Kupferkabel, werden bspw. in der DE 197 34 422 oder der DE 103 13 358 B3 beschrieben.

Bekannte Patch-Panel weisen ein Gehäuse mit einer Bodenplatte, die in einem Kabelbefestigungskamm endet, an dem Kabel mittels Kabelbindern zugfrei festgelegt werden können, Seitenwände, die seitlich in etwa rechtwinkelig davon abgebogenen Befestigungsabschnitten zur Befestigung am Schrank enden sowie eine Frontwand mit Ausschnitten zum Durchtritt der Anschlußelemente, wie Stecker, der darin installierten Kabel auf.

Ein beispielhaftes Patch-Panel ist gezeigt in dem Dokument US2008/0303392, veröffentlicht am 11. Dezember 2008, von Tyco Electronics Corportation, Paul John Pepe.

Je nach Umgebung kann dieses Patch-Panel von einem Deckel, der auf die Seitenwände aufleg- und an diesen befestigbar ist, abgeschlossen werden, um Verstaubung oder Verschmutzung des Inhalts zu vermeiden.

Diese bekannten Patch-Panel werden installiert, indem die Kabel auf den Patch-Panel Gehäuseboden gelegt, an einem Kabelbefestigungskamm mittels Kabelbindern angebunden und die jeweiligen Kabelstecker (bei der VARIOKEYSTONE® Technik) in die in der Frontwand befindliche entsprechende Kabelsteckeröffnung eingerastet werden. Daraufhin wird das so installierte Patch-Panel am Kabelschrank befestigt, indem die Befestigungsabschnitte an den Lochblechen des Kabelschranks über mindestens zwei in den Befestigungsabschnitten eingebrachte Öffnungen verschraubt werden. Ein derartig installiertes Patch-Panel konnte einzeln nur mit weiteren Kabeln oder anderen Kabeln nachinstalliert oder defekte Kabel darin ersetzt werden, indem es vollständig ausgebaut und die Kabel neu eingezogen wurden.

Der Ausbau eines fertig installierten Patch-Panels aus einem Kabelschrank ist jedoch meist nicht möglich ohne andere, im gleichen Bereich eingebaute Patch-Panels ebenfalls auszubauen - der Umbau/Nachinstallation führt zu erheblichem Arbeitsaufwand und Stillstandzeiten des durch den Kabelschrank verbundenen Netzwerks.

Es traten ferner Probleme auf, falls verschiedene Buchsen in einem Patch-Panel vorgesehen werden sollten - aufgrund der nur auf gleiche Steckerarten ausgerichteten Frontplatten war dies praktisch nur mit hohem Aufwand unter individueller Änderung der Frontplatte möglich.

Dies führte zu erheblichen Zeitverlusten bei der Montage; Übersichtlichkeit und Überprüfbarkeit der Installation war nach Montage des Patch-Panel nicht mehr gegeben.

Es ist daher Aufgabe der Erfindung, ein einfach zugängliches Patch-Panel zu schaffen, das Nachinstallation und Reparatur in einfacher Weise ermöglicht.

Die Aufgabe wird erfindungsgemäß durch ein Patch-Panel mit den Merkmalen des Patentanspruches 1 gelöst. Ferner bezieht sich die Erfindung auch auf ein Verfahren zur Nachinstallation von Kabelschränken mit diesen Patch-Panel. Vorteilhafte Weiterbildungen ergeben sich aus den abhängigen Ansprüchen.

Dadurch, daß das Patch-Panel mindestens einen veschieblich herausziehbaren Kabelträger aufweist, an dem die Kabel einschließlich Kabelsteckern befestigt sind, kann nun schubladenartig der Kabelträger nach vorne oder hinten mit den installierten Kabeln herausgezogen werden, ohne das Patch-Panel-Gehäuse selbst umständlich aus dem Schrank herausbauen zu müssen. Dadurch können erhebliche Installationszeiten, welche bei Netzwerken das Gros der Kosten verursachen, verkürzt und die Handhabung des Patch-Panels stark vereinfacht werden.

Bei einer Ausführungsform ist das erfindungsgemäße Patch-Panel für Kabel mit Kabelsteckern ausgelegt, wie sie bspw. im DE 102004004229B4 beschrieben sind und bspw. von der Fa Leoni unter der Bezeichnung "VARIOKEYSTONE ®"-Technik " rhältlich sind. Der große Vorteil der "VARIOKEYSTONE ®"-Technik ist, dass man Kabel einer hohen Kategorie - bspw. Kategorie 7 - verlegen und Dosen mit Kategorie 6 verwenden Kann. Entsprechenden Dosen einer höheren Kategorie können bei Bedarf unkompliziert nachgerüstet werden. So können zunächst günstige Module der Kategorie 6 eingesetzt werden und in Zukunft pro Dose innerhalb weniger Minuten ohne komplizierten Anschlussaufwand ein Modul der Kategorie 7 eingesetzt werden. Dadurch sind Installationen mit VarioKeystone® Technik flexibel, lassen bspw. die heute üblichen RJ45-Dosen anschließen, die Kabel selbest sind aber schon heute für Kategorie 7 geeignet. So kann kosteneffizient das Netzwerk auf gestiegene Bandbreitenanforderungen vorbereitet werden. Die VARIOKEYSTONE (R)-Technik ermöglicht Übertragungsstrecken besser als Klasse E. Aufgrund der modularen Bauweise ist es bspw. möglich, das Steckgesicht bei Bedarf mit sehr geringem Aufwand von RJ45 auf Tera zu ändern, wobei keine Neuinstallation der Datendosen erforderlich ist. Werden zukünftig neue Steckgesichter auf den Markt gebracht, ist auch daran eine Anpassung möglich. VARIOKEYSTONE (R) bietet außerdem die Möglichkeit der Verlängerung oder Änderung eines Links, die insbesondere bei Verkabelungen, die nur auf einige Jahre ausgelegt sind, zum Tragen kommt, wie z. B. in der Automobilindustrie. Mit dem Link-Extender lassen sich zwei mit Kabelsteckern konfektionierte Kabel nahezu verlustfrei verbinden bzw. verlängern.

Die Kabelstecker können in die Frontwand eingerastet/befestigt werden und dann mit den jeweiligen Kontaktgehäusen je nach Anforderung versehen werden.

Das erfindungsgemäße Patch-Panel wird installiert, indem die Kabel mit den Kabelsteckern auf den Kabelträger gelegt und die Stecker in die Frontwand des Kabelträgers eingerastet werden. Das Kabel wird sodann an der Kabelbefestigung, z. B. einem Kabelkamm, mittels Kabelbindern gegen Zug gesichert. Der installierte Kabelträger wird auf den Gehäuseboden des front -und rückseitig offenen Gehäuses geschoben - unabhängig davon, ob das Gehäuse nun in einem Kabelschrank installiert ist oder nicht. Nach Einschieben des installierten Kabelträgers wird eine Frontplatte vor der Gehäusefront angebracht, die nur mit einem Fixiermittel, wie einer Schraube, befestigt ist, sodaß die Frontplatte unabhängig von einem Abbau des Gehäuses am Schrank angebracht bzw. abgebaut werden kann. Durch das Anbringen der Frontplatte ist nun die übliche Anbringung und Abstützung der Kabelstecker des VARIOKEYSTONE®) möglich, je nachdem, welche Verkabelung verlegt wird. Es kann sich dabei um RJ45, 2xRJ45, Tera, EC7, SubD9, SubD15, ML, etc. sowie Übergangskupplungen, wie aus dem DE 10 2004 004229B4 bekannt, handeln. Bevorzugt handelt es sich bei den erfindungsgemäßen Patch-Panels um solche der 19-Zoll-Technik.

Falls andere Steckergesichter an den Kabeln verlangt werden, weil das Netz umgerüstet wird - kann die Frontplatte vom Kabelschrankeinschub abgeschraubt werden, wobei auf Grund der Tatsache, daß das Gehäuse so befestigt ist, daß die Frontplatte ohne Ausbau des Gehäuses entfernbar ist. Danach können je nach Anforderung andere Buchsenmoduln auf die Stecker aufgesteckt werden und ggf. eine andere Frontplatte, welche diese Stecker abstützt (bspw. Doppelkupplungsstecker, welche erheblich größere Öffnungen benötigen) angeschraubt, ohne das Gehäuse selbst abzubauen.

Falls nun nachträglich ein Kabel mehr eingezogen werden soll, ist auch dies in einfacher Weise möglich. Zunächst wird die Frontplatte nach Abnehmen der Kabelbuchsen abmontiert, wobei das Gehäuse aufgrund der Rest-Befestigung am Kabelschrank verbleibt, danach wird eine ggf. vorhandene Verriegelung des Kabelträgers gelöst, der Kabelträger nach vorne oder hinten herausgezogen und mit dem neuen Kabel in an sich bekannter Weise installiert. Nach der Installation wird der nachinstallierte Kabelträger wieder auf den Gehäuseboden geschoben, ggf. neu im Gehäuse verriegelt und die gleiche oder eine andere Frontplatte aufgebracht. Nun können die verschiedenen Kabelbuchsen aufgesteckt und in üblicher Weise entsprechende Kabel angeschlossen werden.

Es ist wichtig, daß das Gehäuse und alle Bestandteile des Patch-Panel erdungsfähig sind - also aus Metall oder aus leitfähigem Kunststoff bestehen.

Nachfolgend wird die Erfindung genauer anhand eines bevorzugten Ausführungsbeispiels sowie der Zeichnung näher erläutert, auf das sie jedoch keinesfalls beschränkt ist. Darin zeigt:
Fig. 1 einen Kabelträger mit verschiedenen Kabelbefestigungseinrichtungen
Fig. 2 ein Gehäuse mit Gehäuseboden, Gehäuseseitenwänden sowie Abdeckung;
Fig. 3.1 - Fig. 3.5 Frontplatten für verschiedenartige Buchsen;
Fig. 4.1 - Fig. 4.3 Frontplatten für gleichartige Buchsen/Stecker
Fig. 4a Details von Ausführungsformen von Kabelanschlußelementeträgern des Kabelträgers
Fig. 4b Details von Ausführungsformen von Kabelanschlußelementeträgern des Kabelträgers; und
Fig. 5 eine Montageskizze für das Patch-Panel

Nachfolgend wird die Erfindung anhand der 19-Zoll Technik beschrieben, sie ist jedoch keinesfalls auf diese eingeschränkt, sondern lässt sich auf alle Kabelschränke, in denen boxenartige Einsätze befestigt sind, anwenden.

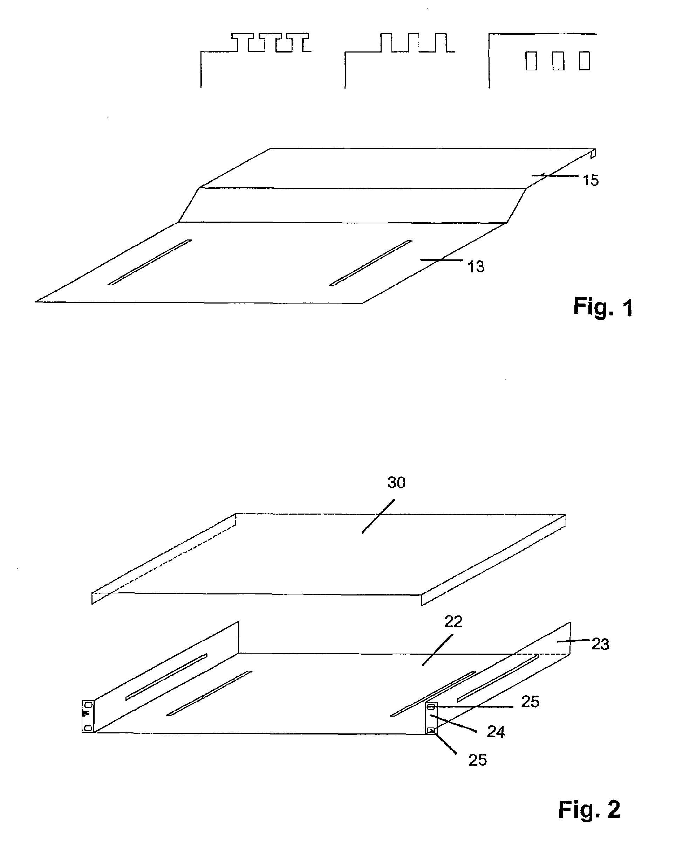

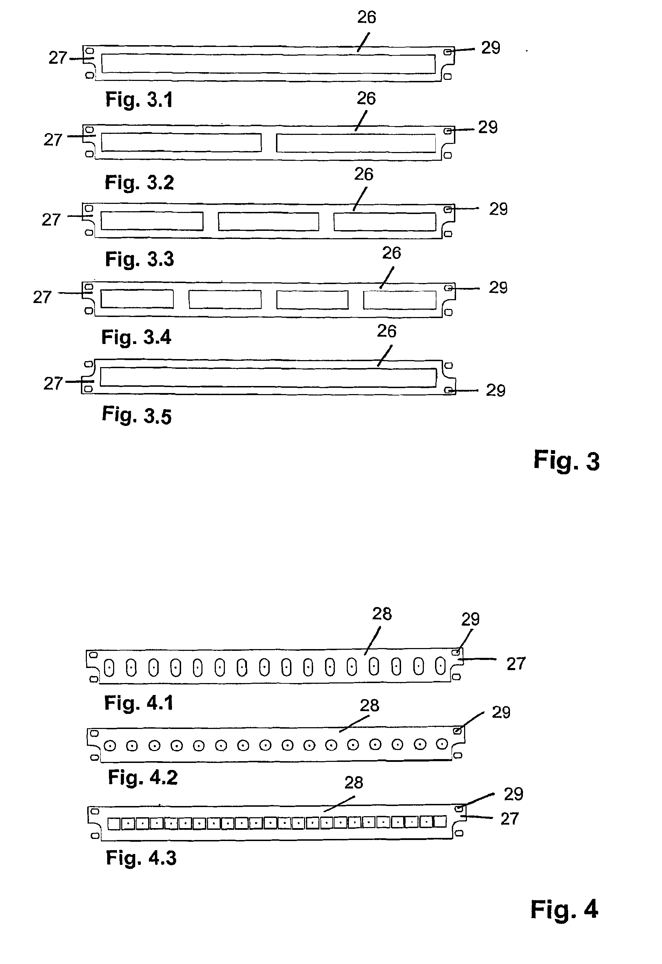

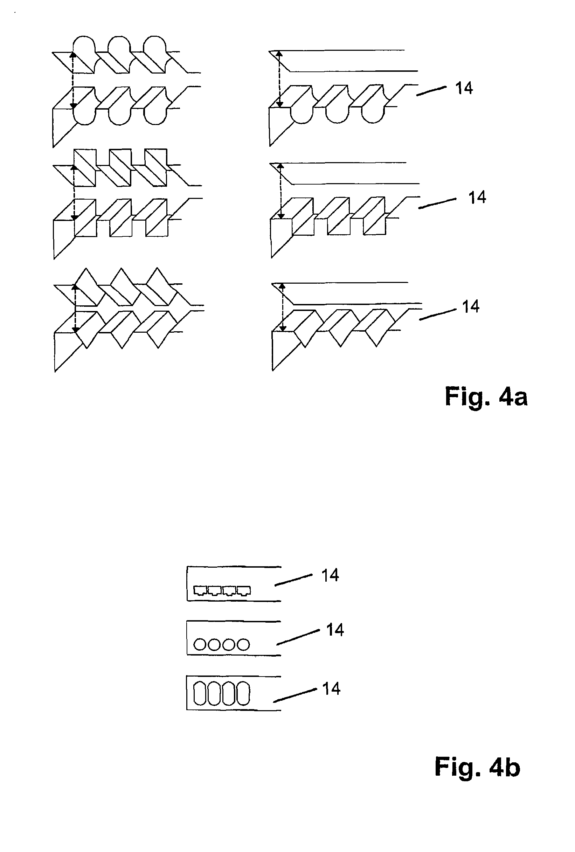

In Fig. 1 ist ein tablettartiger Kabelträger 12 mit einem Kabelträgerboden 13, der nach hinten in eine Kabelbefestigungseinrichtung 15 - verschiedene Ausführungsformen von Kabelbefestigungsformen, bspw. als Kabelkamm sind im oberen Bereich der Fig. 1 beispielhaft ausgebildet. Der Kabelträger dient zur Aufnahme ankommender Kabel, in der Regel von metallischen Datenkabeln, wie Kupfer Datenkabel oder mehradrige Signal- oder Telefonkabel. An dem Kabelträger 12 ist einstückig mit diesem oder auch getrennt davon ein Kabelanschlußelemententräger 14 - bspw. als Kabelsteckerträger (Leoni VARIOKEYSTONE®) Fig. 4a oder aber als Buch-senträger - (bspw. für Buchsen wie RJ45, Terra, SubD91525, ML 4 - 8) ausgebildet und befestigt (Fig. 4b). Er wird in einer bevorzugten Ausführungsform auf den Ka-belträger 12 in einem vorherbestimmten Abstand zum Frontblech montiert, bspw. durch eine Rastverbindung oder aber eine Schraubverbindung. Der Kabelanschluß-träger 14 ist das Trägerelement für die Anschlußelemente beliebiger Form (bspw rund, oval, eckig etc.), welche unterschiedliche Formen haben können. Bei der Ausführungsform als Kabelsteckerträger (Fig. 4a) gemäß VARIOKEYSTONE® Technik sind 2 Halbschalen als Teil des Kabelanschlußelementeträgers 14 gezeichnet, die zusammengebaut die Stecker festklemmen. Bei einer gespannten Einprägung des Kabelträgers zum Einrasten des Steckers kann auf die zweite Halbschale verzichtet werden. Bei der Ausführungsform als Buchsenträger - Fig. 4b) - wird das Kabel direkt ohne Steckung an die Buchse montiert. Das Gehäuse für den Kabelanschlußträger ist in Fig. 2 gezeigt. Das Gehäuse weist einen Gehäuseboden 22, Seitenwände 23 und an die Seitenwände im wesentlichen senkrecht dazu anschließende Gehäuseseitenbefestigungsabschnitte 24 auf. In den Seitenbefestigungsabschnitten 24 sind Befestigungseinrichtungen 25 ausgebildet, welche das Anbringen des Gehäuses 20 in einem Kabelschrank ermöglichen. Bei der in Fig. 2 dargestellten Ausführungsform handelt es sich dabei um Durchgangsbohrungen 25, durch die Schrauben zum Anschrauben des Gehäuses am Kabelschrank geführt werden. Je nach Umgebung und Erfordernissen kann auch ein Gehäusedeckel 30 vorgesehen sein, welcher Verschmutzung oder Beschädigung der installierten Kabel weiter hindert. Bei der Montage werden die Anschlußelemente - bspw. Kabelstecker, ausschließlich auf den Kabelträger 12 im Kabelanschlußelemententräger 14 montiert und so positioniert, dass das Frontblech 27 vor den mindestens einen Kabelanschlußelementträger 14 montiert wird, wodurch ein Herausziehen des Kabelträgers 12 aus dem Gehäuse 20 zu Kabelinstallationszwecken möglich ist, ohne das Patchpanel aus dem Kabelschrank herauszubauen. Der Kabelanschlußelementträger 14 ist meist auch das Teil, das die Verbindung zum Endpotential ermöglicht und bestimmt die geometrische Position derselben zur Frontplatte. Falls Kabel ohne Kabelstecker eingesetzt werden, kann ein Buchsenträger 14 verwendet werden (Fig. 4.1 - Fig. 4.3). Die Frontplatte 28 wird der jeweiligen Buchse angepasst. Diese Frontplatte kann ohne Ausbau des Grundgehäuses an- und abgebaut werden und wird bspw. durch 2 oder mehr Befestigungsschrauben lösbar am Gehäuse montiert. In der Regel ist die Höhe der Frontplatte 1 HE (Höheneinheit), sie kann aber je nach Grundgehäuse auch mehrere HE groß sein. Ein installiertes Kabel mit einem Anschlußelement liegt auf dem Kabelträgerboden 13 und verläuft im wesentlichen senkrecht zur Kabelbefestigungseinrichtung. Dort werden die Kabel mittels Kabelbinder od. dgl. gegen Zug gesichert, befestigt. Das Anschlußelement ist in dem in Fig. 4 dargestellten Kabelanschlußelemententräger 14. Ein Kabel mit Kabelstecker verläuft also über den Kabelträger 12 im wesentlichen parallel zu dessen Seitenkanten und ist an der Kabelbefestigungseinrichtung befestigt. Der jeweilige Kabelstecker verläuft durch eine Kabelsteckeröffnung des Kabelanschlußelementeträgers 14, in welcher er befestigt - bspw. geklemmt - ist. Das Kabel ist ferner an der Kabelbefestigungseinrichtung in üblicher Weise mit einem Kabelbinder angebunden.

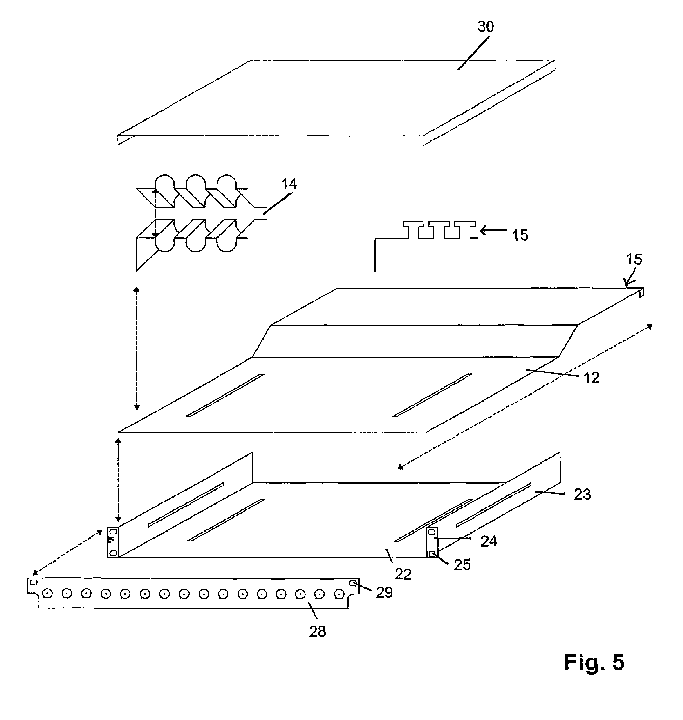

In Fig. 5 ist der Zusammenbau eines mit VARIOKEYSTONE ® Technik installierten Kupfer-Patch-Panels schematisch angedeutet. Der mit Kabel mit Kabelstecker - zur Vereinfachung wurden die Kabel weggelassen - installierte Kabelträger 12 wird von hinten in das im Kabelschrank über Befestigungsbohrungen 25 angeschraubte Gehäuse 20 auf den Gehäuseboden 22 aufgeschoben (der Kabelschrank ist hier aus Vereinfachungsgründen nicht dargestellt). An den beiden vorderen Seitenbefestigungsabschnitten 24, die bevorzugt als Verlängerungen der Seitenwände 24, die rechtwinkelig seitlich nach außen gebogen sind, ausgebildet sind, können nun Befestigungseinrichtungen 25 für die Befestigung am Kabelschrank ausgebildet sein. Diese sind hier Durchgangsbohrungen 25 im jeweiligen Seitenbefestigungsabschnitt, durch welche Schrauben, Stifte od. dgl. treten können - es können aber auch andere Befestigungsarten, wie sie bspw. bei der DE 103 13 358 B1 beschrieben sind, eingesetzt werden.

Auf das nun mit dem installierten Kabelträger 12 ausgestattete und am Kabelschrank über die unteren Öffnungen 25 befestigte Gehäuse 20 wird eine Frontplatte 28 aufgebracht, welche so am Gehäuse/Kabelschrank befestigt ist, daß ihre Befestigung gelöst werden kann, ohne daß das Gehäuse 20 sich vom Kabelschrank trennt. Dies wird bei der dargestellten Ausführungsform dadurch gelöst, daß die Frontplatte 26, 28 nur über eine Durchgangsbohrung 24 am Patchpanel befestigt ist, während das Gehäuse 10 mit einer anderen Durchgangsbohrung 25 an Schrank festgeschraubt ist. Falls nun die - in dieser Ausführungsform - obere Schraube - gelöst wird, kann die Frontplatte 26, 28 abgenommen werden - das Gehäuse 20 verbleibt angeschraubt durch die Bohrung 25 am Schrank.

In Fig. 3 sind beispielhaft Ausführungsformen für Frontplatten 26 ohne direkte Führung der Anschlußkomponenten für unterschiedliche oder überdimensionierte Stecker, wie Doppelstecker, oder aber für gemischte Installationen mit verschiedenen Steckersystemen dargestellt. Durch ein langgestrecktes ununterteiltes Fenster ist jede Buchsenform aufnehmbar. In Fig. 4. 1 - Fig. 4.3 sind Frontblenden für übliche Buchsenformen gezeigt. Fig. 4.1 zeigt eine Frontblende 28 für Sub-D; Fig. 4.2 für ML und Fig. 3 für RJ45/Tera, wobei alle Buchsen gleichen Dimensionen haben.

In Fig. 5 ist schematisch in Explosionsdarstellung ein zusammenzubauendes Patch-Panel 10 gezeigt.

In das Gehäuse 20 mit Schienen auf dem Gehäuseboden 22 wird der (installierte) Kabelträger 12 mit Kabelanschlußelementeträger 14 geschoben, das Frontbech 28 über die Befestigung 29 angeschraubt und ggf. ein Deckel 30 aufgesetzt.

Zur Prüfung/Nachinstallation bei einem fertiginstallierten Kabelschrank kann der erfindungsgemäße Kabelträger vorne schubladenartig nach Abbau des Frontblechs herausgeschoben werden. Die Vorteilhaftigkeit der Installationsmöglichkeit von der Schrankfront her ist offensichtlich, sie erfordert keine Installation im Dunklen in engen Gassen hinter Schränken od. aufwändigen vollständigen Ausbau des PatchPanels zu diesem Zweck. Dadurch, daß erfindungsgemäß nunmehr die Funktion der Kabelbefestigung von derjenigen des PatchPanel-Gehäuses 20 getrennt ist, wird eine sehr viel flexiblere und schneller Installation von Kabeln möglich. Für gemischte Installation können in einem 19 Zoll Patchfeld auch mehr als ein Kabelträger 12 mit einem anderen Kabelanschlußelemententräger 14 eingesetzt werden, wodurch modular ein leichter Austausch möglich ist.

Insgesamt erhöht die Erfindung die Zuverlässigkeit, verringert den Installations- und Wartungsaufwand von Geräteanschlüssen und ermöglicht einen wichtigen Beitrag Kabelträger mit einer anderen Kabelsteckerträger 12 eingesetzt werden, wodurch modular ein leichter Austausch möglich ist.

Insgesamt erhöht die Erfindung die Zuverlässigkeit, ermöglicht das leichte Wechseln von Buchsen jeglicher technischer Anwendung, verringert den Installations- und Wartungsaufwand von Geräteanschlüssen und ermöglicht einen wichtigen Beitrag zur breiteren Durchsetzung der Verlegung von Kabeln in der Datenkommunikation, da durch den separat handhabbaren Kabelträger der vollständige Ausbau der Patch-Panel Gehäuse für die Nachinstallation vermieden werden kann, wie auch durch die getrennt auswechselbaren Frontplatten.

Während die Erfindung detailliert anhand bevorzugter Ausführungsformen beschrieben wurde, ist dem Fachmann ersichtlich, dass verschiedenste Alternativen und Ausführungsformen zur Durchführung der Erfindung im Rahmen des Schutzumfangs der Ansprüche möglich sind.

## Patentansprüche

1. Patch Panel, insbesondere für metallische Leiter aufweisende Kabel, wie Kupferkabel, mit
mindestens einem Kabelträger (12) mit einem Kabelträgerboden (13), einem Kabelanschlußelemententräger (14) mit Anschlußelementaufnahmen bzw. -durchführungen (16) und einer Kabelbefestigung (18);
einem Gehäuse (20) mit einem Gehäuseboden (22), auf dem der mindestens eine Kabelträger (12) nach vorne und hinten, parallel zu den Gehäuseseiten, verschieblich anordenbar ist, Gehäuseseitenwänden (23) und Befestigungseinrichtungen (25) zur lösbaren Befestigung des Patch-Panel (10) an einem Kabelschrank sowie
einer getrennt anschließbaren und getrennt vom Gehäuse austauschbaren Frontplatte (26, 28) mit mindestens einem Ausschnitt entsprechend den zu installierenden Kabelanschlußelementen am Kabel mit Befestigungseinrichtungen (27) zur lösbaren Befestigung der Frontplatte (26, 28) am Gehäuse (20).

2. Patch Panel nach Anspruch 1, **dadurch gekennzeichnet, dass** die Befestigungseinrichtungen für die Frontplatte (26, 28) jeweils seitlich vorspringende Abschnitte der Frontplatte sind, welche nur einen Teil der Befestigungseinrichtungen des Gehäuses (20) am Schrank mit den Befestigungseinrichtungen für die Frontplatte gemeinsam haben, so daß bei Lösen der Frontplattenbefestigung (29) das Gehäuse (20) im Schrank verbleibt.

3. Patch Panel nach einem der Ansprüche 1 bis 2, **dadurch gekennzeichnet,**
**dass** das Gehäuse (20) aus einem Flachmaterial-Abschnitt gebogen ist.

4. Patch Panel nach einem der Ansprüche 1 bis 3, **dadurch gekennzeichnet,**
**dass** eine Federeinrichtung zur elastischen Fixierung des Kabelträgers im Gehäuse (20) vorgesehen ist.

5. Patch Panel nach einem der Ansprüche 1 - 4, **dadurch gekennzeichnet, dass** es im wesentlichen aus Metall ist.

6. Patch Panel nach einem der Ansprüche 1 - 5, **dadurch gekennzeichnet, dass** es zumindest teilweise aus Kunststoff ist.

7. Verfahren zu Installation eines Patch Panel nach einem der Ansprüche 1 bis 6, **gekennzeichnet durch**
Installation des Kabelträgers (12) mit Kabelanschlusselemententräger (14) **durch** Legen mindestens eines Kabels mit Kabelanschlußelement auf den getrennten Kabelträger (12) und Einrasten des Kabelanschlußelements im 1) Kabelanschlußelemententräger (14);
Ggf. Sichern des/der installierten Kabel/s am Kabelbefestiger des Kabelträgers (12) gegen Zug;
Schieben des installierten Kabelträgers (12) mit Kabelanschlusselemententräger (14) auf den Gehäuseboden (22) des front -und rückseitig offenen Gehäuses (20); und
Anbringen einer Frontplatte (26, 28) an der Gehäusefront.

8. Verfahren nach Anspruch 7, **gekennzeichnet durch**
vor dem Auflegen des mindestens einen Kabels:
- Abnehmen der Frontplatte von der Gehäusefront eines installierten Patch Panels; und
- Herausziehen des Kabelträgers (12).

## Claims

1. Patch Panel, particularly for cables with metal conductors such as copper cables, with
at least one cable tray (12) with a cable tray base (13), a cable connection element tray (14) with connector element sockets or passages (16) and cable fastening (18);
a casing (20) with a casing base (22), on which at least one cable tray (12) can be arranged adjustable from the front to the back parallel to the casing sides, casing side walls (23) and fastening devices (25) for detachable fastening of the patch panel (10) to a cable cabinet, and
an exchangeable front plate (26, 28) that is separately connectable and separate from the casing with at least one cutout corresponding to the cable connection elements to be installed at the cable with fastening devices (27) for detachable fastening of the front plate (26, 28) on the casing (20).

2. Patch Panel according to claim 1, **characterised in that** the fastening devices for the front plate (26, 28) are laterally protruding sections of the front plate respectively, which only have one part of the fastening devices of the casing (20) on the cabinet with the fastening devices for the front plate in common, so that the casing (20) remains in the cabinet when the front plate fastening (29) is detached.

3. Patch Panel according to one of the claims 1 to 2, **characterised in that** the casing (20) is bent from a sheet material section.

4. Patch Panel according to one of the claims 1 to 3, **characterised in that** a spring device for elastic fixation of the cable tray is provided in the casing (20).

5. Patch Panel according to one of the claims 1 to 4, **characterised in that** it is essentially made of metal.

6. Patch Panel according to one of the claims 1 to 5, **characterised in that** it is at least partially made of plastic.

7. Method for installing a Patch Panel according to one of the claims 1 to 6, **characterised by**
installation of the cable tray (12) with the cable connection element tray (14) by laying at least one cable with a cable connection element onto the separated cable tray (12) and engaging of the cable connection element in the cable connection element tray (14);
optionally fastening the installed cable(s) to the cable fastener of the cable tray (12) for strain relief;
sliding the installed cable tray (12) with the cable connection element tray (14) onto the casing base (22) of the casing (20) that is open in the front and the back; and installing a front plate (26, 28) on the casing front.

8. Method according to claim 7, **characterised by** before laying at least the one cable:
- removing the front plate from the casing front of an installed patch panel;
and
- pulling out the cable tray (12).

## Revendications

1. Patch panel, en particulier pour les câbles consistant en conducteurs métalliques comme les câbles en cuivre, avec
Au moins un porte câble (12) avec une base de support de câbles (13), un porte éléments de connexion des câbles (14) avec enregistrements des éléments de connexion voire des éléments de traversée (16) et une fixation de câble (18) ;
Un boîtier (20) avec une base de boîtier (22) sur laquelle on peut disposer au moins un porte câbles (12) à l'avant et à l'arrière, parallèlement aux côtés du boîtier et que l'on peut faire glisser, des parois latérales du boîtier (23) et des dispositifs de fixation (25) pour fixer de façon non définitive le patch panel (10) à une armoire de câblage ainsi
qu'une plaque frontale raccordable séparément au boîtier et que l'on peut changer (26, 28) avec au moins une découpure correspondant aux éléments de connexion de câbles à installer sur le câble avec des dispositifs de fixation (27) pour une fixation non définitive de la plaque frontale (26, 28) sur le boîtier (20).

2. Patch panel selon la revendication 1, **caractérisée en ce que** les dispositifs de fixation pour les plaques frontales (26, 28) sont chaque fois des parties avancées des plaques frontales qui n'ont qu'une partie des dispositifs de fixation du boîtier (20) à l'armoire commune aux dispositifs de fixation pour les plaques frontales, de sorte que lorsque l'on détache la fixation des plaques frontales (29), le boîtier(20) reste dans l'armoire.

3. Patch panel selon les revendications 1 et 2, **caractérisé en ce que** le boîtier (20) est courbé à partie d'une partie de feuille.

4. Patch panel selon les revendications de 1 à 3, **caractérisées en ce que** un dispositif à ressort pour la fixation élastique du porte câbles est prévu dans le boîtier (20).

5. Patch panel selon l'une des revendications 1 à 4, **caractérisée en ce qu'**en réalité c'est en métal.

6. Patch panel selon l'une des revendications 1 à 5, **caractérisée en ce que** du moins en partie, c'est en plastique.

7. Procédé pour l'installation d'un patch panel selon l'une des revendications de 1 à 6 **caractérisée par**
l'installation du porteur de câbles (12) avec porte éléments de connexion des câbles (14) en posant au moins un câble avec élément de connexion câble sur les porteurs de câbles séparés (12) et enclenchement d'un élément de connexion de câbles dans le porte éléments de connexion de câbles (14) ;
Le cas échéant sécurisation du/des câble/s installé(s) sur le fixateur de câbles du porte câbles (12) à contre courant ;
Glissement du porte câbles installé (12) avec porte éléments de connexion câbles (14) sur le fond du boîtier (22) du boîtier avant et arrière ouvert (20) ; et apport d'une plaque frontale (26,28) sur la face du boîtier.

8. Procédé selon revendication 7, **caractérisée en ce qu'**avant de mettre au moins un câble :
on separe la plaque frontale de la face du boîtier d'un patch panel installé ; et
on tire le porte câbles (12).
